# EUROPEAN PATENT APPLICATION

(11) **EP 0 774 491 A2**
(43) Date of publication of application: **21.05.1997**
(21) Application number: 96308405.8
(22) Date of filing: 20.11.1996
(51) Int. Cl.: C08L 67/02, C08L 69/00, C08J 5/18

(54) **Films, sheets and molded products made of a polyester/polycarbonate composition**

(30) Priority: 20.11.1995 JP 325084/95; 08.12.1995 JP 345684/95
(71) Applicant: GENERAL ELECTRIC COMPANY, Schenectady, NY 12345 (US)
(72) Inventor: Nagai, Takashi, Utsunomiya, Tochigi pref. (JP); Saito, Akihiro, Utsunomiya City, Tochigi pref. (JP)
(74) Representative: Szary, Anne Catherine, Dr.

(57) **Abstract**

Films, sheets or molded products composed thereof using a transparent polyester/polycarbonate composition having a single glass transition temperature and a single-phase morphology, characterized in that even when said films, sheets or molded products are subjected to heat treatment at a temperature in the vicinity of the glass transition temperature or above, crystallization is inhibited and transparency is retained.

## Description

The present invention concerns sheets, films, or molded products composed thereof made of a transparent polyester/polycarbonate composition.

Such sheets and films are appropriate for use in applications such as food products, packaging, drugs, agricultural applications, construction, electrical and electronic applications, the information industry, and optical applications, as well as any other applications in which transparency is required. Moreover, they are also suitable for applications in which, in addition to transparency, properties such as retention of aroma and flavor and mechanical strength are required.

Ordinarily, polyester is widely used in applications such as molded materials and packaging materials in order to take advantage of its mechanical and chemical properties. However, polyester is frequently a crystalline resin, and as transparent molded products made of polyester frequently turn white or undergo dimensional changes following crystallization, its use has been limited.

For example, transparent film composed of polyethylene terephthalate (abbreviated in the following as PET) (noncrystalline PET) undergoes crystallization at or above the glass transition temperature, and its transparency cannot be maintained.

Moreover, when transparent PET containers containing water are heated on electric ranges, etc., they not only turn cloudy due to crystallization, but this crystallization is accompanied by shrinkage, making it impossible to retain the shape of the container.

Moreover, when thermal treatment is carried out for the purpose of heat sealing, crystallization occurs, resulting in the problems such as opacity and impairment of heat-sealing properties.

On the other hand, polycarbonate (abbreviated in the following as PC) is transparent and has outstanding mechanical properties, particularly impact resistance, and it is widely used in optical applications, etc., such as sheets, films, and lenses, but it has problems such as low fluidity and poor moldability, and its chemical resistance is poor. Moreover, as its gas barrier properties are poor compared to those of polyester, it is unsuitable for containers for food which may be damaged by oxygen, etc., limiting its scope of application.

Concerning heat-sealing properties as well, as the adhesion of the sealing portion is too strong, this causes the problem of preventing easy peeling. In sealing portions of packaging materials, etc., film materials are required which have a certain degree of adhesion, but also provide ease of peeling (easy peeling properties).

There has been a demand for sheets, films, or molded products composed thereof made of transparent resin having the favorable properties of these two resins.

Compositions commonly obtained by kneading, in an extruder, of polycarbonate and a polyester such as PET or polybutylene terephthalate (abbreviated in the following as PBT) lose their transparency due to the addition of PET, PBT, etc.

This is considered attributable to the fact that because polycarbonate and polyesters such as PET or PBT are essentially incompatible, they form separate phases, and the polyester phase undergoes crystallization, resulting in a loss of transparency. It has therefore been difficult to obtain a transparent composition by means of ordinary kneading alone.

The object of the present invention is to improve on such problem areas of prior art by providing transparent films, sheets, or molded products composed thereof using a transparent polyester/polycarbonate composition showing improved properties such as chemical resistance and glass barrier properties compared to polycarbonate and in which, by changing the composition ratio of polyester/polycarbonate, heat sealing becomes possible at a lower temperature than with polycarbonate alone.

The inventors of the present invention conducted thorough research in order to achieve this object and discovered that the object of the invention could be achieved by means of films, sheets, or compositions composed thereof produced by causing a vigorous transesterification reaction between polycarbonate and polyester in a molten state, thus obtaining a transparent resin composition. They discovered that by using said transparent polyester/polycarbonate composition, the physical properties required of films and sheets, such as chemical resistance, vacuum molding properties, and gas barrier properties, could be improved. and it was possible to reduce the heat-sealing temperature so that non-uniformity, etc., between the sealing portion and the adjacent counterpart resin during heat sealing with other resins such as polyolefins could be prevented.

Such transparent polyester/polycarbonate compositions may be obtained by methods such as carrying out transesterification of a polyester oligomer and polycarbonate oligomer in a reaction layer (see Japanese Unexamined Patent Application No. 89-236235), the method of increasing the concentration of terminal hydroxyl groups (phenolic hydroxyl groups) in the polycarbonate (see Japanese Unexamined Patent Application No. 91-203956), and the method of adding a transesterification catalyst to make it possible to achieve transparency in a short period of time using an extruder, etc. (see Japanese Unexamined Patent Application No. 95-127142, submitted by the present applicant).

Among these manufacturing methods, methods are preferred in which a catalyst is added in order to make manufacturing more convenient and an extruder is used.

In films, sheets, and molded products composed thereof obtained from transparent polyester/polycarbonate compositions manufactured by the above methods, by changing the polyester/polycarbonate composition ratio, it is possible to obtain compositions having a desired glass transition temperature and to adjust the heat-sealing temperature.

Moreover, transparent polyester/polycarbonate compositions should preferably have a single glass transition temperature and a single-phase homology (as observed under a scanning electron microscope).

For example, substances in which the degree of transesterification is comparatively low are transparent in the initial stage of molding into a film, and crystallization can be caused to occur by means of drawing, thermal treatment, etc. (in the vicinity of the glass transition temperature or at a higher temperature), and in such cases, together with an increase in properties such as chemical resistance and gas barrier properties, one can take advantage of the phenomenon of whitening due to crystallization for use as an injector. However, the problems of a lack of transparency and dimensional changes due to crystallization may occur.

On the other hand, in the case of transparent polyester/polycarbonate compositions in which transesterification proceeds to a sufficient degree, transparency is maintained even after heat treatment (thermal treatment) at a temperature in the vicinity of or above the glass transition temperature, and such compositions are therefore suitable for use in containers which are reheated on electric ranges, etc., and for pharmaceutical or food product applications in which high-temperature sterilization treatment is carried out. Moreover, in cases in which such films or sheets are subjected to vacuum molding, problems such as loss of transparency do not occur during the molding process in vacuum molded products or during heating of molded products. Moreover, transparency is maintained even when heat sealing, etc., is carried out.

In addition to single-layer structures, such films and sheets may have a multilayer structure, such as multiple or superimposed layers. In cases where the transparent polyester/polycarbonate is the inner layer, mechanical strength and gas barrier properties are improved, and when it is the outer layer, not only are mechanical strength and gas barrier properties improved, but the heat-sealing properties of polyester, polycarbonate, etc., can also be improved, with outstanding retention of aroma and flavor.

Moreover, in cases where there are numerous polycarbonate compositions, printability, etc., is improved.

Thus the special properties of films and sheets made from transparent polyester/polycarbonate compositions may be taken advantage of in a wide variety of applications.

For example, the transparent polyester/polycarbonate composition of the present invention can easily be manufactured by a process in which, during kneading of A) polycarbonate and B) polyester, one adds C) a transesterification catalyst and/or D) a protonic acid and/or derivative thereof, or C) a transesterification catalyst, D) a protonic acid and/or derivative thereof, and E) a compound having a hydroxyl group.

Here, the polycarbonate of Component A) is an aromatic homopolycarbonate or copolycarbonate manufactured by reacting an aromatic dihydroxy compound and a carbonate precursor.

Moreover, the polycarbonate of the present invention may also be branched. This type of branched polycarbonate may be obtained by reacting a multifunctional aromatic compound with an aromatic dihydroxy compound and a carbonate precursor. Examples of multifunctional aromatic compounds used in manufacturing a branched polycarbonate are presented in the specifications of U.S. Patent Applications Nos. 3,028,385, 3,334,154, 4,001,124, and 4,131,576.

Polycarbonate resin is generally characterized by having the repeated structural units shown in the following formula

-O-A-O-C(=O)-

(In the above formula, A is a divalent residue of an aromatic dihydroxy compound). The aromatic dihydroxy compound used contains 2 hydroxyl groups as functional groups, and these are mononuclear or polynuclear aromatic compounds which are directly bound to carbon atoms in aromatic nuclei. There are no particular restrictions on these aromatic dihydroxy compounds, and various commonly-known compounds may be used. Examples include compounds having the following formula 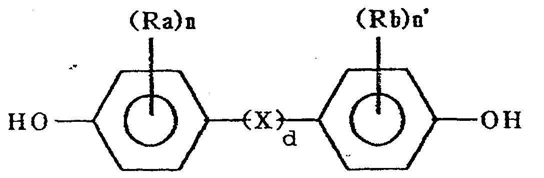 (where R^{a} and R^{b} are individual halogen atoms (such as chlorine, bromine, fluorine, and iodine) or monovalent hydrocarbon groups, X is - (R^{c}-) C (-R^{d})-, - C (=R^{e})-, -O-,-S-, -SO-, or -SO₂-, R^{c} and R^{d} are individual hydrogen atoms or monovalent hydrocarbon groups, R^{e} is a divalent hydrocarbon group, n and n' are individual integers from 0-4, and d is 0 or 1).

Specifically, these compounds include bis(hydroxyaryl)alkanes such as bis(4-hydroxyphenyl)methane, 1,1-bis(4-hydroxyphenyl)ethane,
1,2-bis(4-hydroxyphenyl)ethane, bis(4-hydroxyphenyl)phenylmethane,
bis(4-hydroxyphenyl)diphenylmethane, 2,2-bis(4-hydroxyphenyl)propane (referred to as bisphenol A), 2,2-bis(4-hydroxyphenyl)butane, 2,2-bis(4-hydroxyphenyl)octane,
bis(3,5-dimethyl-4-hydroxyphenyl)methane,
1,1-bis(3 ,5-dimethyl-4-hydroxyphenyl)ethane,
1.2-bis(3,5-dimethyl-4-hydroxyphenyl)ethane,
2,2-bis(3-methyl-4-hydroxyphenyl)propane,
2,2-bis(3,5-dimethyl-4-hydroxyphenyl)propane,
2,2-bis(3,5-dimethyl-4-hydroxyphenyl)butane,
bis(3,5-dimethyl-4-hydroxyphenyl)phenylmethane, bis(3,5-dimethyl-4-hydroxyphenyl) diphenylmethane, 1,1-bis(4-hydroxy-t-butylphenyl)propane,
bis(3,5-dichloro-4-hydroxyphenyl)methane,
2,2-bis(3,5-dichloro-4-hydroxyphenyl)propane, bis(3,5-dibromo-4-hydroxyphenyl) methane, 2,2-bis(3-bromo-4-hydroxyphenyl)propane, and
2,2-bis(3,5-dibromo-4-hydroxyphenyl)propane, bis(hydroxyaryl) cycloalkanes such as 1,1-bis(4-hydroxyphenyl)cyclopentane and 1,1-bis(4-hydroxyphenyl)cyclohexane, dihydroxyaryl sulfones such as bis(4-hydroxyphenyl)sulfone,
bis(3,5-dimethyl-4-hydroxyphenyl)sulfone, and
bis(3,5-dibromo-4-hydroxyphenyl)sulfone, hydroxyaryl ethers such as bis(4-hydroxyphenyl)ether, bis(3,5-dimethyl-4-hydroxyphenyl)ether, and
bis(3,5-dibromo-4-hydroxyphenyl)ether, dihydroxyaryl sulfides such as bis(4-hydroxyphenyl)sulfide, bis(3,5-dimethyl-4-hydroxyphenyl)sulfide, and
bis(3,5-dibromo-4-hydroxyphenyl)sulfide, dihydroxyaryl ketones such as 4,4'-dihydroxy benzophenone, sulfoxides such as bis(4-hydroxyphenyl)sulfoxide, and
4,4'-biphenols. Among these substances, 2,2-bis(4-hydroxyphenyl)propane is particularly preferred.

In addition to the above substances. compounds having the following general formula 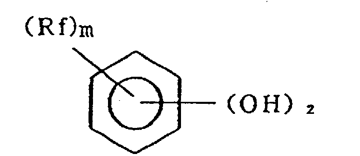 (where Rf indicates independent hydrocarbon groups having 1-10 carbon atoms or halogen compounds or halogen atoms. and m is an integer from 0-4) may be used as the aromatic dihydroxy compound, with examples including resorcinol and substituted resorcinols such as 3-methyl resorcinol, 3-ethyl resorcinol, 3-propyl resorcinol, 3-butyl resorcinol, 3-t-butyl resorcinol, 3-phenyl resorcinol, 3-cumyl resorcinol, 2,3,4,6-tetrafluoro resorcinol, or 2,3,4,6-tetrabromo resorcinol; catechol; hydroquinone, or a substituted hydroquinone such as 3-methyl hydroquinone, 3-ethyl hydroquinone, 3-propyl hydroquinone, 3-butyl hydroquinone, 3-t-butyl hydroquinone. 3-phenyl hydroquinone, 3-cumyl hydroquinone, 2,3,5,6-tetramethyl hydroquinone. 2,3,5,6-tetra-t-butyl hydroquinone, 2,3,5,6-tetrafluoro hydroquinone, or 2,3,5,6-tetrabromo hydroquinone, and substances such as the 2,2,2',2'-tetrahydro-3,3,3',3'-tetramethyl-1,1'-spirobis(1H-indene)-7,7'-diol shown in the following formula

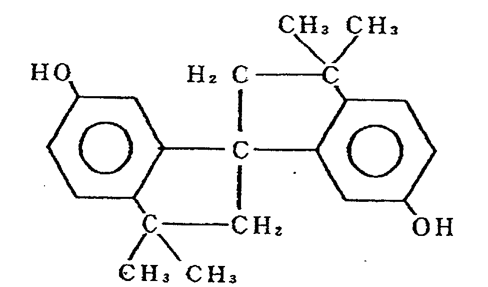

These aromatic dihydroxy compounds may be used either individually or in combinations of 2 or more.

In manufacturing the polycarbonate, any commonly-known manufacturing method may be used, with examples including (1) the method of synthesizing polycarbonate by causing transesterification of an aromatic dihydroxy compound and a carbonate precursor (such as a carbonic acid diester) in a molten state and (2) methods involving the reaction of an aromatic dihydroxy compound and a carbonate precursor (such as phosgene) in a molten state (particularly the surface method).

For example, such manufacturing methods are presented in Japanese Unexamined Patent Applications Nos. 90-175723 and 90-124934 and U.S. Patent Applications Nos. 4,001,184, 4,238,569, 4,238,597, and 4,474,999. In method (1), the carbonic acid diester, catalyst, etc., used should preferably be those specified in aforementioned Japanese Unexamined Patent Applications Nos. 90-175723 and 90-124934.

Examples of such carbonic acid diesters include diphenyl carbonate, ditolyl carbonate, bis(chlorophenyl) carbonate, m-cresyl carbonate, dinaphthyl carbonate, bis(diphenyl) carbonate, diethyl carbonate, dimethyl carbonate, dibutyl carbonate, and dicyclohexyl carbonate, but the invention is not limited to these. Diphenyl carbonate should preferably be used.

Moreover, preferred catalysts include Lewis acid catalysts and basic compound catalysts, such as the compounds presented in Japanese Unexamined Patent Application No. 92-175368, filed by the present applicant.

A halogenated carbonyl, diaryl carbonate, or bishaloformate may be mentioned as examples of the carbonate precursor used in method (2), and any of these substances may be used. Examples of halogenated carbonyls include carbonyl bromide, carbonyl chloride (referred to as phosgene), and mixtures thereof. Examples of aryl carbonates include diphenyl carbonate, ditolyl carbonate, bis(chlorophenyl)carbonate, m-cresyl carbonate, dinaphthyl carbonate, and bis(diphenyl) carbonate. Moreover, examples of haloformates include 2,2-bis(4-hydroxyphenyl)propane (referred to as bisphenol A), bischloroformates or bisbromoformates of aromatic dihydroxy compounds such as hydroquinone, and bischloroformates or bisbromoformates of glycols such as ethylene glycol. Any of the aforementioned carbonate precursors may be used, but carbonyl chloride (referred to as phosgene) is preferred.

As acidic components, the invention may also contain dicarboxylic acid or a derivative thereof (dicarboxylic acid ester, dicarboxylic acid chloride, etc.). Examples of dicarboxylic acids include aromatic dicarboxylic acids such as terephthalic acid and isophthalic acid; aliphatic dicarboxylic acids such as succinic acid, glutaric acid, adipic acid, pimelic acid, suberic acid, azelaic acid, sebacic acid, decanedioic acid, and dodecanedioic acid; and alicyclic dicarboxylic acids such as cyclopropane dicarboxylic acid, 1,2-cyclobutane dicarboxylic acid, 1,3-cyclobutane dicarboxylic acid, 1,2-cydopentane dicarboxylic acid, 1,3-cyclopentane dicarboxylic acid, 1,2-cyclohexane dicarboxylic acid, 1,3-cyclohexane dicarboxylic acid, and 1,4-cyclohexane dicarboxylic acid. Of course, carboxylic acid derivatives thereof, i.e., carboxylic acid alkyl esters or aryl esters, acid chloride, etc., may also be used.

These dicarboxylic acids or their derivatives may be used alone or in combinations of two or more. The dicarboxylic acid or derivative thereof should be contained in the aforementioned carbonic acid diester in an amount of 50 mole % or less, and preferably 30 mole % or less.

In manufacturing polycarbonate, together with the aromatic dihydroxy compound and carbonic acid diester, a multifunctional compound having three or more functional groups per molecule may also be used. A compound having a phenolic hydroxyl group or a carboxyl group should preferably be used as this multifunctional compound, with compounds containing three phenolic hydroxyl groups being particularly preferred.

Specific examples of the preferred compound include
1,1,1-tris(4-hydroxyphenyl)ethane, 2,2',2''-tris(4-hydroxyphenyl)diisopropyl benzene,
α-methyl-α,α,α'-tris(4-hydroxyphenyl)-1,4-diethylbenzene,
α,α',α"-tris(4-hydroxyphenyl)-1,3,5-triisopropylbenzene, phloroglucinol,
4,6-dimethyl-2,4-6-tri(4-hydroxyphenyl)-heptane-2, 1,3,5-tri(4-hydroxyphenyl)benzene,
2,2-bis-[4,4-(4,4'-dihydroxyphenyl)-cyclohexyl]-propane, trimellitic acid,
1,3,5-benzene tricarboxylic acid, and pyromellitic acid.

The use of 1,1,1-tris(4-hydroxyphenyl)ethane or α,α'-α''-tris(4-hydroxyphenyl)-1,3,5-triisopropylbenzene, etc., is particularly preferred.

The multifunctional compound should preferably be present in the amount of 0.03 moles or less with respect to 1 mole of the aromatic dihydroxy compound, and more preferably in the amount of 0.001-0.02 moles, with an amount of 0.01-0.02 moles being particularly preferred.

Polycarbonate having terminal hydroxyl groups may be manufactured by methods such as the following. Specifically, adjustment of the number of terminal groups of the polycarbonate may easily be carried out by changing the molar ratio of the raw material divalent phenol and carbonic acid diester during manufacturing of the polycarbonate by melt polymerization.

For example, when bisphenol A is used as the aromatic dihydroxy compound and diphenyl carbonate is used as the carbonic acid diester, the terminal group of the polycarbonate will be a phenolic residue derived from bisphenol A or a phenyl group derived from diphenyl carbonate, and when the molar ratio of bisphenol A is increased, the molar ratio (I)/(II) of the phenolic terminal groups (I) and non-phenolic terminal groups (II) in the polycarbonate produced will become high.

Moreover, in addition to the aforementioned method, in which manufacturing is carried out by reacting a divalent phenol and a carbonate precursor, polycarbonate having a phenolic hydroxyl group terminal may easily be obtained by decomposing the polycarbonate (i.e., by hydrolysis).

Decomposition methods include that of kneading a mixture of polycarbonate and a compound having a hydroxyl group or carboxyl group and/or water, etc., in a device such as an extruder which is capable of melt-kneading.

In this case, it is preferable to add a catalyst, and component C) of the present invention can be effectively used as this catalyst.

Provided that the compound having a hydroxyl group is a compound having an alcoholic or phenolic hydroxyl group, the hydroxyl group may be located at any position on the compound; for example, compounds containing one hydroxyl group may be aliphatic, alicyclic, or aromatic compounds having 1-30 carbon atoms or a mixture thereof, with examples including ethanol, butanol, octanol, stearyl alcohol, cyclohexanol, methylcyclohexanol, octylcyclohexanol, phenol, naphthol, cresol, xylenol, t-butylphenol, dioctylphenol, and stearylphenol.

Looking at compounds containing 2 or more hydroxyl groups, in addition to the diols mentioned above and below as examples of the structural components of Components A) and B) and compounds having 3 or more hydroxyl groups, glycerol, pentaerythritol, etc., can also be mentioned.

Furthermore, in compounds having 2 or more hydroxyl groups, a portion of the hydroxyl group may be an ester.

Moreover, examples of di/trivalent phenol and carbonyl precursors include a polycarbonate oligomer with a molecular weight of 5,000 or less having a phenolic hydroxyl group as a terminal using diphenol carbonate and bisphenol A, a polyester oligomer having a molecular weight of 5,000 or less having a phenolic hydroxyl group as a terminal using dicarboxylic acid and bisphenol A, and a polyester oligomer having a molecular weight of 5,000 or less having a hydroxyl group as a terminal using an aliphatic or alicyclic diol and a dicarboxylic acid.

Among these substances, an aromatic diol such as bisphenol A or polycarbonate oligomer is preferred.

Examples of compounds containing a carboxyl group include aliphatic, alicyclic, or aromatic monocarboxylic acids having 2-30 carbon atoms such as acetic acid, butyric acid, stearic acid, and benzoic acid. Examples of compounds containing 2 or more carboxyl groups include the dibasic acids mentioned below as structural components of Components A) and B), citric acid, and malic acid.

Moreover, examples of decomposable compounds include nucleophilic compounds such as amines, dibasic or polybasic acids, salts, etc.

In order to maintain the physical properties of the polycarbonate, the amount of such compounds having a hydroxyl group, water, or nucleophilic compounds added with respect to 100 parts by weight of the polycarbonate should be 0.001-10 parts by weight, preferably 0.01-5 parts by weight, more preferably 0.03-3 parts by weight, and even more preferably 0.05-2 parts by weight, with the optimum range being 0.05-1 part by weight.

Looking at the ratio of terminal hydroxyl groups, the equivalence ratio of the phenolic terminal groups (I) to the non-phenolic terminal groups (II) ((I) : (II)) should be 5 : 95-100 : 0, and preferably 10 : 90-100 : 0.

Thus by using polycarbonate having a terminal hydroxyl group, transparency following melt-kneading with polyester can be improved compared to polycarbonate not having a terminal hydroxyl group.

As the polyester (Component B)), one may use a polyester of a diol (or an ester-forming derivative thereof) and a dicarboxylic acid (or an ester-forming derivative thereof), and together with said diol component and dicarboxylic acid component, the following compounds may be used either individually or in combination. Moreover, substances having a hydroxyl group and a carboxylic acid group in one molecule, such as a lactone, may also be used in combination.

Examples of the diol component include aliphatic diols having 2-15 carbon atoms such as ethylene glycol, propylene 1,2-glycol, propylene 1,3-glycol, 1,4-butane diol, 2,3-butane diol, hexane 1,6-diol, octane 1,8-diol, neopentyl glycol, decane 1,10-diol, diethylene glycol, and triethylene glycol. Preferred aliphatic diols are ethylene glycol and 1,4-butane diol.

Moreover, substances such as 1,2-cyclohexane diol, 1,4-cyclohexane diol, and 1,4-cyclohexane dimethanol can also be mentioned. These alicyclic diols may be used in either a cis or trans configuration or a mixture of the two. A preferred alicyclic diol is 1,4-cyclohexane dimethanol.

Furthermore, one may also mention aromatic divalent phenols such as resorcinol, hydroquinone, and naphthalene diol, polyglycols such as polyethylene glycol, polypropylene glycol, and polytetramethylene glycol having a molecular weight of 400-6,000, and the bisphenols presented in Japanese Unexamined Patent Application No. 91-203956 such as bisphenol A.

Examples of the dicarboxylic acid component include aromatic dicarboxylic acids such as isophthalic acid, terephthalic acid, orthophthalic acid, 2,2'-biphenyl dicarboxylic acid, 3,3'-biphenyl dicarboxylic acid, 4,4'-biphenyl dicarboxylic acid, 4,4'-diphenyl ether dicarboxylic acid, 1,5-naphthalene dicarboxylic acid, 1,4-naphthalene dicarboxylic acid, 2,6-naphthalene dicarboxylic acid, and 1,2-di-(4-carboxyphenyl)ethane, and aliphatic or alicyclic dicarboxylic acids such as adipic acid, succinic acid, oxalic acid, malonic acid, suberic acid, azelaic acid, sebacic acid, decane dicarboxylic acid, and cyclohexane dicarboxylic acid.

These diols and dicarboxylic acids should preferably be used alone as Component B), and compounds having a hydroxyl group and a carboxyl group in one molecule such as caprolactam may also be used, or 2 or more diols or dicarboxylic acids may be used in combination. Furthermore, the polyester obtained may be used either alone or in combination.

Moreover, the catalyst used in manufacturing the polyester may be any ordinary catalyst, such as an antimony compound, a titanium compound, a tin compound, or a germanium compound, but a catalyst not showing volatility, such as an antimony compound, a titanium compound, or a tin compound, should preferably be used in order to keep the amount of the catalyst added low.

Furthermore, in the polyester obtained by polymerization of a carboxylic acid ester and a diol, the greater the number of hydroxyl group terminals originating from the diol, the more transparent the kneading composition with polycarbonate of the present invention will be.

Among polyesters, polyesters of alkyl dicarboxylic acid and aromatic diols or aromatic dicarboxylic acid and alkylene glycol are preferred, with specific examples including polyethylene terephthalate, polybutylene terephthalate, polyethylene naphthalate, poly-1,4-cyclohexylene methylene terephthalate, poly(1,4-cyclohexylene methylene terephthalate-co-iso-phthalate), poly(1,4-butylene terephthalate-co-isophthalate), and poly(ethylene-co-1,4-cyclohexylene methylene terephthalate).

In carrying out kneading, the component ratio by weight between the polycarbonate (Component A)) and the polyester (Component B)) (A/B) should be 99/1-1/99, preferably 95/5-20/80, more preferably 90/10-30/70, and even more preferably 80/20-40/60, with the optimum range being 70/30-50/50.

Furthermore, the intrinsic viscosity (IV) of the polycarbonate (methylene chloride, 25°C) should be 0.3-1.0 dl/g, and preferably 0.35-0.8 dl/g, with an intrinsic viscosity of 0.4-0.7 dl/g being particularly preferred, and the intrinsic viscosity (IV) of the polyester (tetrachloroethane/phenol = 2/1, 30°C) should be 0.3-2.0 dl/g, and preferably 0.5-1.7 dl/g, with an intrinsic viscosity of 0.6-1.4 dl/g being particularly preferred. If the IV is lower than the above values, the mechanical strength of the kneading composition will decrease, and if it is higher, moldability will decrease.

As the transesterification catalyst (Component C)), any commonly-known transesterification catalyst may be used. Examples of Lewis acid-type catalysts include tin compounds such as dibutyl tin oxide, tin oxalate, tin acetate, tin oxide, dibutyl tin dimethoxide, and butyl tin hydroxide oxide, titanium compounds such as tetrabutoxy titanium, tetraphenoxy titanium, titanium oxide, and titanium oxalate, antimony compounds such as antimony trioxide, and antimony oxide tartrate, zinc compounds such as zinc acetate, zinc stearate, and zinc acetylacetone, boric acid compounds such as triphenoxy boron and zinc borate, germanium compounds such as germanium oxide and germanium ethoxide, manganese acetate, and cobalt acetate.

Examples of basic catalysts which may be used include organic basic catalysts, alkali metals, and alkaline earth metals.

Examples of organic basic compounds include nitrogen-containing basic compounds such as ammonium hydroxides having an alkyl or aryl group, e.g., tetramethylammonium hydroxide, tetraethylammonium hydroxide, tetrabutylammonium hydroxide, and tetraphenylammonium hydroxide and salts of the aforementioned ammonium and acids having a pKa value weaker than 4.

Moreover, examples of nitrogen-containing basic compounds other than those mentioned above include tertiary amines having the general formula NR₃ (where R indicates an alkyl or aryl group having 1-25 carbon atoms such as a methyl, ethyl, phenyl, benzyl, or toluyl group), such as triethylamine, tributylamine, trioctylamine, triphenylamine, or dibenzyl methylamine, a secondary or primary amine having the general formula NHR₂ or NH₂R (where R is the same as indicated above), or pyridine, methyl pyridine, methoxy pyridine, quinoline, imidazole, or ammonia.

Moreover, tetraalkyl or aryl phosphonium hydroxides such as tetrabutyl phosphonium hydroxide may also be mentioned.

Looking at alkali metal or alkaline earth metal compounds, examples of inorganic compounds include alkali metals such as sodium, potassium, lithium, and cesium, alkaline earth metal hydroxides of calcium, magnesium, barium, etc., hydrides, amides, carbonates, phosphates, borates, etc.

Furthermore, examples of salts with organic acids include carboxylate, salts with phenolic hydroxyl groups, and salts with alcoholic hydroxyl groups.

One can also mention compounds with acetylacetone, crown ethers, etc.

The amount of the transesterification catalyst (Component C)) added with respect to a total of 100 parts by weight of Components A) and B) should be 0.0001-1 parts by weight, and preferably 0.0005-0.5 parts by weight in the case of Lewis acid catalysts, with an amount of 0.001-0.1 parts by weight being particularly preferred and 0.005-0.05 being the optimum range. Moreover, in the case of a basic catalyst, the amount should be 0.00001-0.1 parts by weight, and preferably 0.00005-0.05 parts by weight, with the amount of 0.0001-0.1 parts by weight being particularly preferred, and the optimum range being 0.0005-0.005 parts by weight.

Moreover, a Lewis acid catalyst and a basic catalyst may be used simultaneously, and in this case, compared to cases in which these individual components are used alone, one may decrease the amount of the catalysts used.

If the amount of the catalyst added is less than the above-mentioned ranges, the additive effect will not appear, and if it is more than these ranges, this will cause a decrease in molecular weight during kneading and result in impairment of physical properties.

Concerning the protonic acid and/or derivative thereof used (Component D), any protonic acid will be effective. The derivative is a compound which shows acidity during granulation due to heat, reaction with the resin, etc., such as a sulfonic acid ester, an ammonium salt of a strong acid, or a metallic salt. Moreover, in acids which are dibasic or polybasic, one may use either a partially esterified compound or a partial metallic salt. These acidic compounds may be used either individually or in combination.

One can mention a variety of acids as examples of protonic acids. These include phenols such as phenol, cresol, and xylenol, phenols having an electron attractive group as a substituent such as 2,4-dinitrophenol and 2,4,6-trinitrophenol, carboxylic acids such as formic acid, methoxyacetic acid, acetic acid, butyric acid, citric acid, and malic acid, carboxylic acids having an electron attractive group at position α such as trifluoroacetic acid, trichloroacetic acid, 1,1-difluoropropionic acid, monochloroacetic acid. dichloroacetic acid, monofluoroacetic acid, nitroacetic acid, and cyanoacetic acid, aromatic carboxylic acids having an electron attractive group as a substituent such as m-nitrobenzoic acid, 2,4-dinitrobenzoic acid, and 2,4,6-trinitrobenzoic acid, dicarboxylic acids such as oxalic acid, 2-carboxypropionic acid, malonic acid, succinic acid, fumaric acid, and maleic acid, aromatic dicarboxylic acids such as phthalic acid, isophthalic acid, terephthalic acid, and 1,3-naphthalene dicarboxylic acid, inorganic acids such as boric acid, bromine acid [sic], nitric acid, iodic acid, perchloric acid, periodic acid, bromic acid, and sulfuric acid, sulfonic acids such as benzenesulfonic acid, p-toluenesulfonic acid, naphthalenesulfonic acid, methylsulfonic acid, and fluorosulfonic acid, and phosphoric acids such as phosphoric acid, phosphorous acid, hypophosphorous acid, pyrophosphoric acid, metaphosphoric acid, and polyphosphoric acid.

Examples of ester derivatives include sulfonic acid esters such as methylbenzene sulfonate, ethylbenzene sulfonate, butylbenzene sulfonate, butyl p-toluene sulfonate, phenyl p-toluene sulfonate, benzyl p-toluene sulfonate, butyl naphthalene sulfonate, and butylmethyl sulfonate, mono- and diesters such as mono(2,4-ditertiarybutylphenyl)phosphate, di(2,4-ditertiarybutylphenyl)phosphate, monophenyl hypophosphate, dimethyl phosphate, di-(2,4-dimethylphenyl)phosphate, and diethyl hypophosphate, dimethyl sulfuric acid, etc.

Furthermore, examples of metallic salt derivatives include monosodium carbonate, monosodium phosphate, disodium phosphate, acid sodium pyrophosphate, monopotassium phosphate, dilithium phosphate, magnesium phosphate, monosodium phosphite, disodium phosphite, monopotassium phosphite, dilithium phosphite, calcium phosphite, monosodium oxalate, monopotassium phthalate, monosodium borate, and monopotassium sulfate.

The amount of the acid component (Component D)) added with respect to a total of 100 parts by weight of Components A) and B) should be 0.001-1 part by weight, preferably 0.001-0.5 parts by weight, and more preferably 0.005-0.1 parts by weight, with 0.01-0.1 parts by weight being even more preferable.

If the amount of Component D) added is less than 0.0001 parts by weight, the additive effect will not manifest itself, and if it is greater than 1 part by weight, this will have an adverse effect on the resin component during granulation and molding, causing an undesirable reduction in mechanical strength.

Provided that the compound having a hydroxyl group (Component E) is water or a compound having an alcoholic or phenolic hydroxyl group, the hydroxyl group may be located at any position on the compound.

Compounds containing one hydroxyl group may be aliphatic, alicyclic, or aromatic compounds having 1-30 carbon atoms or a mixture thereof, with examples including ethanol, butanol, octanol, stearyl alcohol, cyclohexanol, methylcyclohexanol, octylcyclohexanol, benzyl alcohol, phenol, naphthol, cresol, xylenol, t-butylphenol, and stearylphenol.

Looking at compounds containing 2 or more hydroxyl groups, in addition to the diols mentioned above as examples of the structural components of Components A) and B) and compounds having 3 or more hydroxyl groups, glycerol, pentaerythritol, etc., can also be mentioned. Furthermore, in compounds having 2 or more hydroxyl groups, a portion of the hydroxyl group may be an ester.

Moreover, examples of the above bi/trivalent phenols and carbonyl precursors include a polycarbonate oligomer with a molecular weight of 5,000 or less having a phenolic hydroxyl group as a terminal using phosgene and diphenol carbonate, a polyester oligomer having a molecular weight of 5,000 or less having a phenolic hydroxyl group as a terminal using dicarboxylic acid, and a polyester oligomer having a molecular weight of 5,000 or less having a hydroxyl group as a terminal using a diol and dicarboxylic acid.

Among the above-mentioned substances, an aromatic diol such as bisphenol A or polycarbonate oligomer is preferred. These compounds having a hydroxyl group may be used either individually or in mixtures of two or more.

The amount of the compound having a hydroxyl group (compound E)) added, with respect to a total of 100 parts by weight of resin, should be 0.001-10 parts by weight, and preferably 0.002-1 part by weight, with 0.005-1 part by weight being particularly preferred, and if the amount added is less than 0.001 parts by weight, the additive effect will not manifest itself, and if it is greater than 10 parts by weight, this may result in a decrease in molecular weight causing a reduction in mechanical strength and bleeding out from the molded product.

Kneading of the mixture composed of the above blend may be carried out in any device equipped with a melt-kneading function, such as a kneader, a monoaxial or biaxial extruder, a vertical or horizontal reaction tank equipped with an agitation function, a mixer, or a roller. Among these methods, that of using a monoaxial or biaxial extruder is preferred due to convenience of manufacturing and economic considerations.

Moreover, although all of the components may be added simultaneously during kneading, it is preferable to use a method in which all of the components except protonic acid are kneaded, protonic acid is added, and further kneading is carried out, or in which protonic acid is added using a side feeder, etc., during kneading of all of the components except said protonic acid.

Molding into a film or sheet may be carried out by any method, such as the inflation method, calender method, T die method, casting method, cutting method, emulsion method, or hot press method. Moreover, the film or sheet may or may not be drawn. Furthermore, molding of the film or sheet may be carried out by any molding method, such as vacuum molding, compression molding, or vacuum pressure molding.

A variety of additives may be added to the composition of the present invention, provided that its purpose is not impaired. Looking at examples of such additives, stabilizers include phosphorus-class stabilizers such as Irgafos 168 (commercial name, manufactured by Ciba-Geigy), Chelex L (commercial name, manufactured by Sakai Kagaku Kogyo K.K.), 3P2S (commercial name, manufactured by Ihara Chemical Kogyo K.K.), Mark 329K (commercial name, manufactured by Asahi Denka Kogyo K.K.), Mark P (same), and Weston 618 (commercial name, manufactured by Sanko Kagaku K.K.), hindered phenol stabilizers such as BHT (commercial name, manufactured by Takeda Yakuhin Kogyo K.K.), Ionox 100 (commercial name, manufactured by Shell Chemical Co.), Age Rite Superlite (commercial name, Vanderbilt), Santonox R (commercial name, manufactured by Monsanto Co.), Antioxidant ZKF (commercial name, manufactured by Bayer AG), Irganox 1076 (commercial name, manufactured by Ciba-Geigy), HYoechst VPOSPI (commercial name, manufactured by Hoechst AG), and Irganox 1010 (commercial name, manufactured by Ciba-Geigy), ultraviolet absorbing agents of the triazole type, etc., such as Cyasorb UV-5411 (commercial name, manufactured by A.C.C.), Cyasorb UV-531 (commercial name, manufactured by A.C.C.), Tinuvin 326 (commercial name, manufactured by Ciba-Geigy), Tinuvin 320 (same), Tinuvin 234 (same), Tinuvin 120 (same), Uvinul D49 (commercial name, manufactured by GAF), and other epoxy-type, thiol-type, and metallic-salt-type stabilizers.

Examples of flame retardants include phosphate-ester-class flame retardants such as TPP, resorcinol polyphosphate, and bisphenol-A polyphosphate (manufactured by Oya Kagaku K.K.), halogen-class retardants such as brominated BPA, brominated BPA polycarbonate, and oligomers thereof, and inorganic flame retardants and flame-retardant auxiliaries such as antimony trioxide, magnesium hydroxide, and calcium hydroxide.

In addition, colorants such as dyes and pigments, mold-releasing agents of the alkyl ester class such as silicone oil, low-molecular-weight polyolefins, pentaerythritol stearate, and glycerin stearate, fiber-reinforcing agents such as glass fibers and carbon fibers, particulate lubricants such as talc, clay, silica, alumina, calcium carbonate, and cross-linked polymers, optical dispersants such as calcium carbonate, plasticizers such as oligomers of polycaprolactam, polyester, and polycarbonate, antistatic agents such as salt compounds with sulfonic acid and alkali metals or alkylphosphonium or polyalkylene glycols such as polyethylene oxide and polypropylene oxide, infrared absorbers, and antibacterial agents may also be added.

The following is an explanation of the invention by means of practical examples, but the invention is not limited to these examples.
- Resins:: PC LEXAN (commercial name, manufactured by Nihon G.E.
- A-1:: Plastics K.K.), terminal hydroxyl group ratio: 35% Intrinsic viscosity in methylene chloride at 25°C: 0.5 dl/g
- A-2:: PC LEXAN (commercial name, same as above), terminal hydroxyl group ratio: 0%
Intrinsic viscosity in methylene chloride at 25°C: 0.5 dl/g
- B-1:: PBT VALOX (commercial name, same as above) MI (250°C, 2.09 mm in diameter, 2.16 kg) = 20 g/10 min
- B-2:: PET Mitsui PET J025 (commercial name, manufactured by Mitsui Seikiyu Kagaku Kogyo K.K.)
- Kneading:: The sample was kneaded in a biaxial extruder having a diameter of 30 mm.
Kneading conditions: Cylinder temperature 270°C, screw rotation 150 rpm
- Injection molding:: Dried samples were made into test sheets using a PS60 model injection molding machine manufactured by Nissei Jushi Kogyo K.K.
Molding conditions: Cylinder temperature 270°C, metal mold temperature 80°C
- Film molding:: The sample was dried in advance (90°C, reduced pressure, 8 hours), and it was then molded into a film using a monoaxial T die film molding machine 30 mm in diameter manufactured by Thermoplastic Co.
Molding conditions: Cylinder temperature: 280°C, die temperature: 270°C, roll temperature: 80-130°C
- Vacuum molding:: A film 300 microns in thickness was prepared, and using a metal mold 85 mm square and measuring 30 mm in depth, molding was carried out with a preheating temperature of 390°C for a period of 9-17 seconds. Evaluation was conducted based on transparency.
- Evaluation:: O: The molded product maintained transparency.
×: The molded product did not maintain transparency and became opaque.
- Thermal treatment test:: The following test piece was subjected to aging and evaluation was conducted based on Haze before and after.
Test piece: An injection-molded test piece 5 cm² x 3 mm in thickness was used. Device used: Perfect Oven GPHH manufactured by Tabai Co.
Aging conditions: 1 hour at 150°C.
- Yellowing index (YI):: The x, y, and z values of an injection-molded plate (plate thickness 3 mm) were measured by the transmission method using an ND-1001 DP manufactured by Nihon Denshoku Kogyo K.K. to determine yellowing index (YI).
- Haze, optical transmittance:: Haze and optical transmittance were measured on an injection-molded plate (plate thickness 3 mm) using the NDH-200 manufactured by Nihon Denshoku Kogyo K.K.
- Glass transition temperature (Tg):: Using the Rheometrix K.K. RDX (dynamic viscosity meter), an injection-molded plate (3.2 mm in thickness) was measured with a temperature elevation rate of 3°C/min., a frequency of 6.28 rad/sec., and a strain of 0.1%.
- Differential scanning calorimeter (DSC):: Measurements were conducted under the following temperature conditions using a SSC 5200 manufactured by Seiko Denshi Kogyo.
- Measuring conditions:: Room temperature → 300°C (80°C/min.), maintained for 2 minutes
300°C → 20°C (20°C/min.), maintained for 2 minutes
20°C → 300°C (20°C/min.)

### Practical Examples 1-14, Comparison Examples 1-8

Polycarbonates having differing total terminal phenolic hydroxyl group ratios (Components A [a-1], A [a-2]: manufactured by Nihon G.E. Plastics K.K.), polyester (Component B [b-1], PBT: manufactured by Nihon G.E. Plastics K.K., Component B [b-2], PET: manufactured by Mitsui Seikiyu Kagaku Kogyo K.K.), a transesterification catalyst (Component C): reagent), an acidic component (Component D): reagent), and a diol component (Component E: bisphenol A, manufactured by Nihon G.E. Plastics K.K.) were blended in the component ratio shown in Table 1 and then kneaded into pellets using an extruder.

Next, injection molding and film molding (thicknesses: 100 and 300 µm) were carried out. The physical properties of the molded products obtained are shown in Tables 2 and 3.

Using a transmission electron microscope, staining was conducted using ruthenium oxide (RuO₄), and the morphology of Practical Examples 2, 4, 5, 7, 9 10, 12, and 13 and Comparison Examples 4, 5, 6, 7, and 8 was observed. The results showed a single-phase structure, with no phase-separation structure being confirmed, in Practical Examples 2, 4, 5, 7, 9, 10, 12, and 13. In Comparison Examples 4, 5, 6, 7, and 8, on the other hand, a phase-separation structure was confirmed.

In the comparison examples, the polycarbonate and polyester (PET in Comparison Example 4, PBT in Comparison Examples 5, 6, 7, and 8) showed a completely separated phase structure. Moreover, the test piece of Practical Example 7 did not show any phase separation structure even after thermal treatment for 1 hour at 150°C.

Furthermore, there were single glass transition temperatures in Practical Examples 4 and 13 of 152°C and 106°C respectively, but double glass transition temperatures caused by the respective components were seen for polycarbonate and polyethylene terephthalate in Comparison Example 4 at 158°C and 83°C and for polycarbonate and polybutylene terephthalate in Comparison Example 7 at 135°C and 62°C respectively, and as was the case for observation by scanning electron microscope, a single phase without a phase separation structure was seen in the practical examples, while a separated-phase structure was seen in the comparison examples.

In measurement using a differential scanning colorimeter (DSC), crystallization due to polyester and melting point peaks were not observed in Practical Examples 2, 7, and 10, but in Comparison Examples 2 and 5, a melting point peak appeared in the vicinity of 220°C.

Table 1 shows the blending ratios of the practical examples and comparison examples.

**Table 1**

| Blending | | | | | | | | | | |
|---|---|---|---|---|---|---|---|---|---|---|
| | Component A | | Component B | | Component C | | Component D | | Component E | |
| | | % | | % | | ppm | | ppm | | ppm |
| Practical Example 1 | A-1 | 90 | B-1 | 10 | - | | H₃PO₃ | 200 | - | |
| Practical Example 2 | A-1 | 90 | B-1 | 10 | NaOH | 20 | H₃PO₃ | 200 | - | |
| Practical Example 3 | A-2 | 90 | B-1 | 10 | StCOONa | 50 | H₃PO₃ | 200 | - | |
| Practical Example 4 | A-1 | 90 | B-2 | 10 | NaOH | 20 | NA₂H₂P₂O₇ | 200 | - | |
| Practical Example 5 | A-2 | 90 | B-2 | 10 | NaOH | 20 | NA₂H₂P₂O₇ | 200 | BPA | 500 |
| Practical Example 6 | A-1 | 75 | B-1 | 25 | - | | H₃PO₃ | 200 | - | |
| Practical Example 7 | A-1 | 75 | B-1 | 25 | NaOH | 20 | H₃PO₃ | 200 | - | |
| Practical Example 8 | A-1 | 75 | B-1 | 25 | Bu₂SnO | 100 | H₃PO₃ | 200 | - | |
| Practical Example 9 | A-2 | 75 | B-1 | 25 | NaOH | 20 | H₃PO₃ | 200 | - | |
| Practical Example 10 | A-2 | 75 | B-1 | 25 | NaOH | 20 | H₃PO₃ | 200 | BPA | 500 |
| Practical Example 11 | A-1 | 60 | B-1 | 40 | - | | H₃PO₃ | 200 | - | |
| Practical Example 12 | A-1 | 60 | B-1 | 40 | NaOH | 20 | H₃PO₃ | 200 | - | |
| Practical Example 13 | A-2 | 60 | B-1 | 40 | NaOH | 20 | H₃PO₃ | 200 | BPA | 500 |
| Comparison Examp. 1 | A-2 | 100 | - | | - | | - | | - | |
| Comparison Examp. 2 | A-2 | 90 | B-1 | 10 | - | | - | | - | |
| Comparison Examp. 3 | A-2 | 90 | B-1 | 10 | - | | H₃PO₃ | 200 | - | |
| Comparison Examp. 4 | A-2 | 90 | B-2 | 10 | - | | - | | - | |
| Comparison Examp. 5 | A-2 | 75 | B-1 | 25 | - | | - | | - | |
| Comparison Examp. 6 | A-2 | 75 | B-1 | 25 | - | | H₃PO₃ | 200 | - | |
| Comparison Examp. 7 | A-2 | 60 | B-1 | 40 | - | | - | | - | |
| Comparison Examp. 8 | A-2 | 60 | B-1 | 40 | - | | H₃PO₃ | 200 | - | |
| Note referring to table: *StCOONa: sodium stearate, BPA: bisphenol-A, Na₂H₂P₂O₇: acid sodium pyrophosphate. | | | | | | | | | | |

**Table 2**

| Table of physical properties (1) | | | | | | | |
|---|---|---|---|---|---|---|---|
| | Initial period | | | | After annealing | Vacuum molding properties | |
| | YI | Trans % | Haze % | Tg °C | Haze % | int | After annealing |
| Practical Example 1 | 1.9 | 89.8 | 0.5 | 146 | 1.6 | ○ | ○ |
| Practical Example 2 | 2.1 | 89.8 | 0.5 | 145 | 0.5 | ○ | ○ |
| Practical Example 3 | 2.6 | 89.8 | 0.5 | 145 | 2.1 | ○ | ○ |
| Practical Example 4 | 2.5 | 89.8 | 0.5 | 152 | 0.6 | ○ | ○ |
| Practical Example 5 | 2.6 | 89.8 | 0.5 | 151 | 0.6 | ○ | ○ |
| Practical Example 6 | 3.2 | 89.6 | 1.5 | 123 | 28 | ○ | × |
| Practical Example 7 | 3.2 | 89.8 | 0.5 | 122 | 0.6 | ○ | ○ |
| Practical Example 8 | 3.2 | 89.8 | 0.5 | 122 | 0.7 | ○ | ○ |
| Practical Example 9 | 3.8 | 89.7 | 0.8 | 122 | 4.5 | ○ | ○ |
| Practical Example 10 | 4.1 | 89.7 | 0.5 | 122 | 0.8 | ○ | ○ |
| Practical Example 11 | 3.2 | 89.7 | 1.5 | 106 | 90 | ○ | × |
| Practical Example 12 | 3.1 | 89.8 | 0.4 | 106 | 0.6 | ○ | ○ |
| Practical Example 13 | 2.7 | 89.7 | 0.5 | 106 | 0.8 | ○ | ○ |
| Comparison Examp. 1 | 1.6 | 90.2 | 0.3 | 160 | 0.3 | ○ | ○ |
| Comparison Examp. 2 | 8.4 | 80.7 | 4.2 | 146 | 45 | ○ | × |
| Comparison Examp. 3 | 2.9 | 88.7 | 6.8 | 146 | 72 | ○ | × |
| Comparison Examp. 4 | 3.9 | 77.1 | 18.0 | 158/83 | 80 | Δ^{*1} | × |
| Comparison Examp. 5 | 17.5 | 61.9 | 35.1 | 144/61 | 91 | × | × |
| Comparison Examp. 6 | 77^{*2} | 40.1 | 64.9 | 145/62 | 97 | × | × |
| Comparison Examp. 7 | 97^{*2} | 16.3 | 95.6 | 135/62 | 100 | × | × |
| Comparison Examp. 8 | 98^{*2} | 15.9 | 95.6 | 135/62 | 100 | × | × |
| Notes referring to Table: | | | | | | | |

| | | | | | | | |
|---|---|---|---|---|---|---|---|
| *1. Vacuum molding properties int: initial phase, annealing: 150°C, 1 hour. Evaluation: Δ: Slight cloudiness observed. | | | | | | | |
| *2. Optical transmittance low, reference value. | | | | | | | |

**Table 3**

| Physical properties (2) | | | | | | | |
|---|---|---|---|---|---|---|---|
| | Tearing strength^{*1} | | Tensile strength^{*2} | | | Gas permeation coefficient^{*3} | |
| | Vertical N/cm | Horizontal N/cm | Strength MPa | Elongation % | Young's modulus MPa | Oxygen | Water vapor |
| Practical Example 2 | 77 | 75 | 86 | 107 | 2700 | 44 | 4.111 |
| Practical Example 7 | 106 | 112 | 85 | 127 | 2800 | 26 | 3.024 |
| Practical Example 12 | 1080 | 1160 | 84 | 180 | 2700 | 16 | 2.482 |
| Comparison Examp. 1 | 68 | 67 | 90 | 103 | 27009 | 69 | 5.194 |

| | | | | | | | |
|---|---|---|---|---|---|---|---|
| Notes referring to Table: *1. Elmendorf tearing test (according to JIS Z1702) | | | | | | | |
| *2. Test speed: 200 mm/min., Young's modulus 50 mm/min. (according to JIS K6781). | | | | | | | |
| *3. Gas permeation coefficient: The lower the value, the higher the barrier properties. Measured film thickness 0.1 mm, area 50 cm² Oxygen permeation coefficient (cc mm/m² 24 hr atm), measurement temperature 23°C, relative humidity 0% Water vapor permeation coefficient (g mm/m² day), measurement temperature 40°C, relative humidity 90% | | | | | | | |

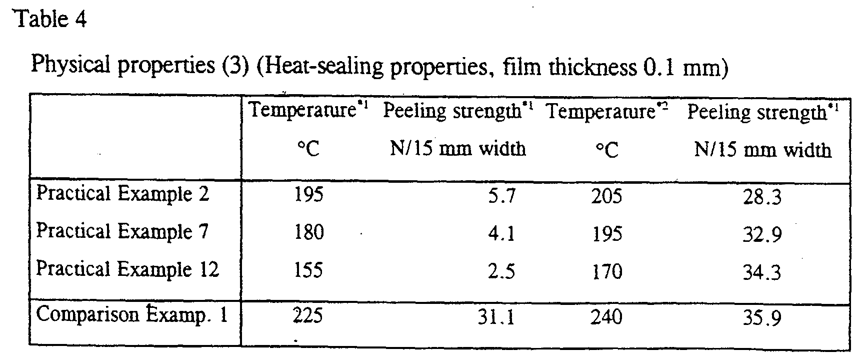

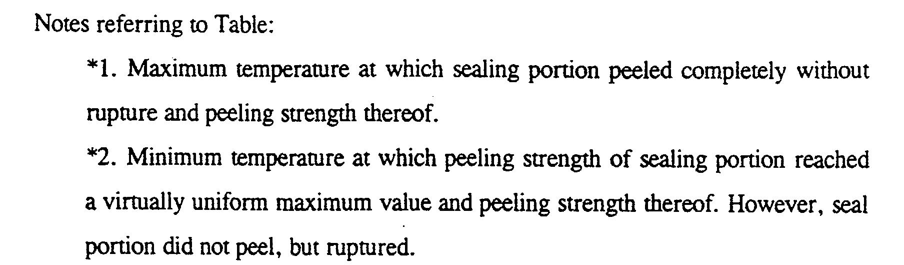

As can be clearly seen from the explanations contained in the above practical examples, molded products using the kneaded composition of the present invention show a high degree of transparency (based on optical transmittance and haze value), they have a single glass transition temperature, and their morphologies are also of the single-phase type. Moreover, films using this composition show favorable vacuum molding properties, and they do not show an increase in haze even after thermal treatment, maintaining transparency. The preheating time in vacuum molding was long in the polycarbonate of Comparison Example 1 at 17 seconds, but as polyester was added, it was possible to shorten this preheating time.

Moreover, as the polyester composition ratio was increased, gas barrier properties and tearing strength increased while transparency was maintained.

Concerning heat-sealing properties, as polyester was added, the heat-sealing temperature decreased, and it was also possible to decrease tearing strength during complete peeling.

As we have seen in the preceding, sheets and films obtained according to the present invention show outstanding physical properties, and can be expected to be used in a broad range of applications.

## Claims

1. Films, sheets, or molded products composed thereof using a transparent polyester/polycarbonate composition.

2. Films, sheets, or molded products composed thereof according to Claim 1, characterized by using a transparent polyester/polycarbonate composition having a single glass transition temperature and a single-phase morphology.

3. Films, sheets, or molded products composed thereof according to Claims 1 or 2, characterized in that even when said films, sheets, or molded products are subjected to heat treatment at a temperature in the vicinity of the glass transition temperature or above, crystallization is inhibited and transparency is retained.

4. Films, sheets, or molded products composed thereof according to any of Claims 1 through 3, characterized by using a transparent polyester/polycarbonate composition produced by melt kneading of polycarbonate and polyester.

5. Films, sheets, or molded products composed thereof using the transparent polyester/polycarbonate composition according to any of Claims 1 through 3, characterized by being produced by the addition of a transesterification catalyst and/or acid during melt kneading of polycarbonate and polyester.

6. Films, sheets, or molded products composed thereof using the transparent polyester/polycarbonate composition according to any of Claims 1 through 5, characterized in that the component ratio by weight of polyester/polycarbonate is 99/1-1/99.

7. Films, sheets, or molded products composed thereof using the transparent polyester/polycarbonate composition according to any of Claims 1 through 6, characterized in that the polyester is either polyethylene terephthalate or polybutylene terephthalate and is used either individually or in combination.

8. Films, sheets, or molded products composed thereof using the transparent polyester/polycarbonate composition according to any of Claims 1 through 7.
